# EUROPEAN PATENT APPLICATION

(11) **EP 2 939 876 A1**
(43) Date of publication of application: **04.11.2015**
(21) Application number: 14003763.1
(22) Date of filing: 08.11.2014
(51) Int. Cl.: B60P 1/48

(54) **Skip loader provided with a system for fixing a container by means of hydraulic tensioners**

(30) Priority: 30.04.2014 IT MI20140796
(71) Applicant: Pris-Mag S.r.l., 20871 Vimercate (MB) (IT)
(72) Inventor: Sala, Alessandro, 20871 Vimercate (MB) (IT); Sala, Paolo, 20871 Vimercate (MB) (IT)
(74) Representative: Guella, Paolo

(57) **Abstract**

The invention refers to a skip loader (1) that can be mounted on a truck and comprising a pair of telescopic arms (5, 6) rotatable, with respect to the truck, about a horizontal axis for moving a container (15) connectable to the arms at two lateral opposite walls of the same. Each lateral wall (17, 18) is connectable to one of the two arms by means of a first and a second chain (26, 27). Each of said chains is pivoted, at two opposite ends, to the lateral wall and to an end of the arm, respectively. When the container is connected to the arms, the chains connected to the same lateral wall converge towards said end of the arm and lie on opposite parts with respect to a plane of symmetry of the container arranged transversally to the axis of rotation of the arms. The skip loader object of the invention comprises a pair of third chains (30), each of which is pivoted, at two ends that are mutually opposite, to one of the lateral walls, so as to be slack. The skip loader also comprises, for each arm, a tensioner (33) of the third chain. Each tensioner comprises a hydraulic cylinder having a base at which the hydraulic cylinder is hinged to the arm, and one end translatable with respect to the base at which the hydraulic cylinder is hinged at one end of a hook. The latter is also hinged to the arm at one end thereof, opposite the hydraulic cylinder. The hook is further translatable parallel to the arm at the end thereof which is opposite the hydraulic cylinder. An extension of the hydraulic cylinders determines a rotation of the hooks due to which the hooks tighten the third chains, applying a force tending to move the third chains away from the end of the arms in which the first and the second chains converge. The intensity of said force is such as to integrally connect the container to the arms, fixing it without the need for further constraints, so as to allow, following a rotation of the arms, tilting the container with respect to the ground.

## Description

### Field of application of the invention

The present invention relates to the field of so called "heavy-duty" or "industrial" land vehicles, that is motorized means intended for moving on the ground, used, mostly, for the transportation of goods whose motor is able to generate a driving torque having a sufficiently high intensity to permit the movement of the vehicle even when the latter transports a load with a mass significantly higher than the maximum transportable mass for motorcycles, mopeds and cars. In the following of the present description, the expression "truck" is intended to identify any industrial vehicle.

More precisely, the present invention refers to systems that can be connected to the chassis of a track or of a trainer towable by the same, in order to make the truck or its trainer suitable for transporting an appropriate container, or in order to use the truck or its trailer for a so-called "special purpose". In the following of the present description, the expression "bodywork" is intended to identify any connectable system of the above type. Bodyworks for industrial vehicles include, by way of example, hook equipment, boxes (possibly tipping boxes and/or boxes provided with a crane), skip loaders, so called "silo-handling" systems, and so called "press-containers" (for example for the transport, compaction and processing of waste). Incidentally, bodyworks can be made so that they are constantly connected to a truck (or trailer thereof) or so that they can be connectable and disconnectable from the same. In the latter case, the bodyworks are usually termed "demountable".

In particular, the present invention relates to skip loaders that is bodyworks provided with a pair of rotatable telescopic arms for lifting a container indicated in the following of the present description with the expression "container". More precisely, the present invention has as its object a skip loader provided with a system for fixing said container to the aforesaid pair of rotatable arms.

### Review of the known art

Traditional skip loaders comprise:
- a platform acting as a load-bearing structure and connectable to a truck for transmitting to the latter the forces acting on the other components of the skip loader;
- a pair of telescopic arms hinged to the platform at a first end, so that they can rotate with respect to the latter in a preferably vertical plane;
- means suitable for imparting a rotation in said preferably vertical plane to the arms;
- a container comprising a base at which the container can be rested on the platform or on the ground, and at least one pair of lateral walls that are mutually opposite and at each of which the container is connectable to the arms at a second end thereof opposite the first end.

Each lateral wall of the container is connectable to one of the arms through means suitable for allowing a rotation between the container and the arms in a preferably vertical plane. When the container is connected to the arms, the container is at least partially interposed between the same and the lateral walls are respectively opposite the arms.

The connection of each arm to the lateral wall to which it is opposite is made by means of a first and a second chain, each of which is pivoted, at two ends that are mutually opposite the second end of the arm and the lateral wall opposite the arm, respectively. When the container is connected to the arms, the chains connected to the same arm converge at the second end of the arm (possibly by being pivoted to a same pin) and are pivoted to the lateral wall of the container so that, when the container is connected to the arms, the first and the second chains are arranged, on each lateral wall, so as to form a "V" with the vertex in the second end of the arms and the concavity facing the base of the container. By virtue of the connections described above, when the container is connected to the arms and does not rest on the platform, or on the ground (that is when the container is "flying"), the container is swingable with respect to the arms and, if balanced, it has the base that remains arranged almost parallel to the ground.

The skip loader further comprises a stop, preferably shaped as a hook and possibly retractable, integrally connected to the supporting structure so as to be interposed between the arms. The container comprises at least one short bar in proximity to the base and at which the container is couplable to the stop in order to allow, as will be better illustrated in the following, tilting the container when the same needs to be emptied.

As regards the illustration of the operation, as is known, in order to tilt the container so as to empty the same of its contents, by effect of gravity only, starting from a configuration in which the container rests on the platform at the base, the stop is retracted and the first and the second chains are pivoted both to the arms, and to the lateral walls of the container, the stop needs to be taken out and the arms moved in an appropriate manner, so as to couple the short bar of the container to the stop. Due to this coupling, the container is rotatable with respect to the bearing structure around the stop, in a preferably vertical plane. By moving the arms, it is thus possible to rotate the container around the stop, tilting it by a desired angle.

In the above described skip loader, the container can be tilted only following a coupling thereof with the stop. The container is thus tiltable in only one configuration, in which the base of the container is in proximity to the platform and can be emptied only with the aid of the stop. Therefore, it is not possible to tilt the container while keeping the same at a certain height from the ground. This entails that, by way of example, it is not possible to pour the contents of a container directly into the box of a second truck by means of the above described traditional skip loaders. In fact, a similar operation could be carried out only by placing the truck on which the skip loader is mounted at a higher level with respect to the truck on which the box is mounted.

To overcome this drawback a skip loader was conceived, comprising, for each arm, in addition to the above listed components except for the stop and the short bar:
- a third chain pivoted, at ends that are mutually opposite, to the lateral wall opposite the arm. The third chain preferably has a length greater than the distance between the two pins of the lateral wall to which it is connected, so as to be slack. Preferably, the third chains are pivoted to the lateral walls at the same pins to which the first and the second chains are pivoted;
- a linear actuator integrally connected to the arm and having an end that is translatable with respect to the latter. Said translatable end is movable between a first position at which the translatable end is not in contact with the third chain, and a second position at which the translatable end is in contact with the third chain so as to apply a force to the latter tending to move the third chain away from the second end of the arm and of such intensity to tighten the third chain.

The linear actuator is, by way of example, a hydraulic cylinder and therefore acts as a tensioner for the third chain.

When the third chains are tightened by the linear actuators, the forces tending to move the third chains away from the second end of the arms are transmitted to the container and, from this, to the first and second chains until reaching the pins to which the latter are pivoted on the second end of the arms. The intensity of the force applied to each third chain is such that, in light of the above described kinematics, the first and the second chains are integrally connected to the pins to which they are pivoted, so that they are no longer rotatable with respect to the arms. When the third chains are tightened, the container is therefore integrally connected to the arms. This allows tilting the container by rotating the arms, even after extending the latter, so as to keep the container lifted off the platform.

In the above described skip loader, in order for the container to be integrally connectable to the arms, it is required that, for each arm, the third chain intercepts the translation direction of the mobile end of the linear actuator. Given that the third chains are slack before coming into contact with the linear actuators, the third chains could swing following movements of the container or due to vibrations transmitted to the same from the latter. There is therefore the risk that the third chains will not intercept the translatable ends of the linear actuators. If this is the case, a user of the skip loader would have to translate the mobile ends of the linear actuators, repeatedly moving them close to and away from the third chains until "coupling" the third chains, tightening them. This is clearly a waste of time.

In order to solve this problem, it is possible to connect to each linear actuator, at the translatable end, a plate having a surface that can oppose the corresponding third chain, with transverse width sufficient with respect to the third chain to minimize the risk of the third chain not intercepting the mobile end when the latter is made to translate. Such plates create, however a transverse bulk with respect to the lateral walls of the container. Said bulk can prove dangerous upon loading the container on the truck. When the arms of the skip loader are made to rotate and/or extended or shortened to pivot the first and the second chains to the lateral walls of the container, there is the risk that the plates impact the container. This, besides being a clear danger, is likely to damage the skip loader.

### Objects of the invention

The object of the present invention is to provide a skip loader in which the container is integrally connectable to the arms of the system, and which allows, at the same time, overcoming the aforesaid drawbacks.

### Summary of the invention

The object of the present invention is a skip loader comprising:
- a bearing structure connectable to a truck;
- a first and a second arm adjustable in length, each arm being connected, at a first end, to the bearing structure by means of first connection means suitable for allowing a rotation between the arm and the bearing structure about a first preferably horizontal axis;
- means for moving the arms, said moving means being suitable for imparting the arms with a rotation about said first axis. The moving means will be indicated in the following of the present description with the expression "rotation means";
- a container indicated in the following of the present description with the expression "container" and comprising:
   - a base at which the container can be rested on the bearing structure or on the ground;
   - at least one pair of lateral walls that are mutually opposite and at each of which the container is connectable, by means of second connection means, to one of the arms at one second end thereof opposite the first end,
      when the container is connected to the arms, the container is at least partially interposed between the arms and each arm is at least partially opposite the lateral wall to which the arm is connectable,
      the second connection means being suitable for allowing a rotation between the container and the arms about a second preferably horizontal axis, and still more preferably parallel to said first axis,
   - an opening delimited by the lateral walls, at least partially opposite the base and through which it is possible to introduce or withdraw objects into/from the container;
   the skip loader further comprising, for each lateral wall:
- stopping means connected to the lateral wall and suitable for stopping a movement of coupling means connected to the arm opposite the lateral wall, the coupling means being movable between a first position at which the coupling means are not in contact with the stopping means, and a second position at which the coupling means are in contact with the stopping means;
   the skip loader further comprising, for each arm:
- actuator means connected to the arm and suitable for moving the coupling means between the first and the second position, the coupling means being connected to the arm by means of the actuator means,
   when the coupling means are in the second position, the actuator means applying, by means of the coupling means, a force to the stopping means, tending to alter the distance between the stopping means and the second end, that is a force tending to translate the container with respect to the arms, said force being of intensity such that, due to the application of said force, the second connection means do not allow any rotation between the container and the arms so that the container is integrally connected to the arms,
   wherein, according to the invention, for each arm:
- the actuator means comprise a third end and a fourth end that are mutually opposite;
- the coupling means comprise a first element extended lengthwise and indicated in the following of the present description with the expression "first longitudinal element", the first longitudinal element being transversely in contact with the stopping means when the coupling means are in the second position, the actuator means applying said force to the stopping means by means of the first longitudinal element, the first longitudinal element comprising a fifth end and a sixth end that are mutually opposite;
   the actuator means being connected to the arm at the third end by means of third connection means suitable for allowing a rotation between the actuator means and the arm in a first plane arranged transversely to the lateral wall,
   the actuator means being connected, at the fourth end, to the fifth end of the first longitudinal element by means of fourth connection means suitable for allowing a rotation between the actuator means and the first longitudinal element in a second plane arranged transversely to the lateral wall,
   the first longitudinal element being connected to the arm at the sixth end by means of fifth connection means suitable for allowing a rotation between the first longitudinal element and the arm in a third plane arranged transversely to said lateral wall,
   a mutual separation of the third and fourth end determining a first rotation of the first longitudinal element with respect to the arm in said third plane, the first rotation determining an approaching of the first longitudinal element to the stopping means and a passage of the coupling means from the first position to the second position,
   mutual approaching of the third and fourth end determining a second rotation of the first longitudinal element with respect to the arm in said third plane, the second rotation taking place in a sense opposite that of the first rotation, the second rotation determining a separation of the first longitudinal element from the stopping means and a passage of the coupling means from the second position to the first position.

Advantageously, given that the first longitudinal elements are rotatable in planes arranged transversely to the lateral walls of the container and that the first longitudinal elements are transversely in contact with the stopping means when the coupling means are in the second position, the risk that the stopping means do not intercept the coupling means is minimized when the coupling means are moved from the first position to the second position, and, at the same time, the bulk of the first longitudinal elements is minimized in a direction transverse to the lateral walls of the container when the coupling means are in the first position.

Additional innovative features of the present invention are described in the dependent claims.

According to one aspect of the invention, the first longitudinal element is arranged parallel to the arm when the coupling means are in the first position. According to another aspect of the invention, the actuator means are arranged parallel to the arm when the coupling means are in the first position.

According to another aspect of the invention the actuator means comprise a linear actuator including a base connected to the arm at the third end by means of the third connection means, and a translatable element with respect to the base, connected, at the fourth end, to the fifth end of the first longitudinal element by means of the fourth connection means.

According to another aspect of the invention, the first longitudinal element has a concavity directed towards the stopping means when the coupling means are in the second position.

Advantageously, due to the concavity, the first longitudinal elements tend to "embrace" the stopping means as the coupling means pass from the first position to the second position, so as to further reduce the risk that the stopping means do not intercept the coupling means.

According to another aspect of the invention, the fifth connection means are further suitable for allowing a translation of the first longitudinal element parallel to the arm.

Advantageously, as the coupling means pass from the first position to the second position, the first longitudinal element approaches the stopping means not only by rotating but also by translating along the arm of the skip loader. This further reduces the risk that the stopping means do not intercept the coupling means when the coupling means are moved from the first position to the second position.

According to another aspect of the invention, the intensity of the force applied by the actuator means is preferably comprised between 30 KN and 100 KN, and still more preferably between 50 KN and 80 KN.

According to another aspect of the invention, said first, second and third plane are parallel to each other.

According to another aspect of the invention, said first, second and third plane are parallel to said arm.

According to another aspect of the invention, the stopping means comprise, for each lateral wall, a second element extended lengthwise and indicated in the following of the present description with the expression "second longitudinal element", the second longitudinal element comprising a seventh end and an eighth end that are mutually opposite, the second longitudinal element being connected, at the seventh and eight end, to the lateral wall at two points of the latter by means of sixth connection means suitable for allowing a rotation between the second longitudinal element and the lateral wall in a fourth plane preferably parallel to the lateral wall, the second longitudinal element being flexible and having a length greater than the distance between said two points of the lateral wall, so as to be slack, the force applied by the actuator means tightening the second longitudinal element.

### Brief description of the figures

Further objects and advantages of the present invention will be clear from the following detailed description of an embodiment thereof and from the attached drawings, given by way of non-limiting explanation, wherein:
- figure **1** shows, in perspective view, a skip loader mounted on a truck for transporting a container, according to the present invention;
- figure **2** shows, in perspective view, a detail of an arm of the skip loader of figure 1, in a configuration in which the container is rotatable with respect to the arms of the system;
- figure **3** shows, in perspective view, the detail of figure 2 in a configuration in which the container is integrally connected to the arms of the system;
- figure **4** shows, in perspective view from below, the detail of figure 3.

### Detailed description of several preferred embodiments of the invention

In the following description, a figure can be illustrated also with reference to elements not expressly indicated in that figure but in other figures. The scale and proportions of the various depicted elements do not necessarily correspond to the real scale and proportions.

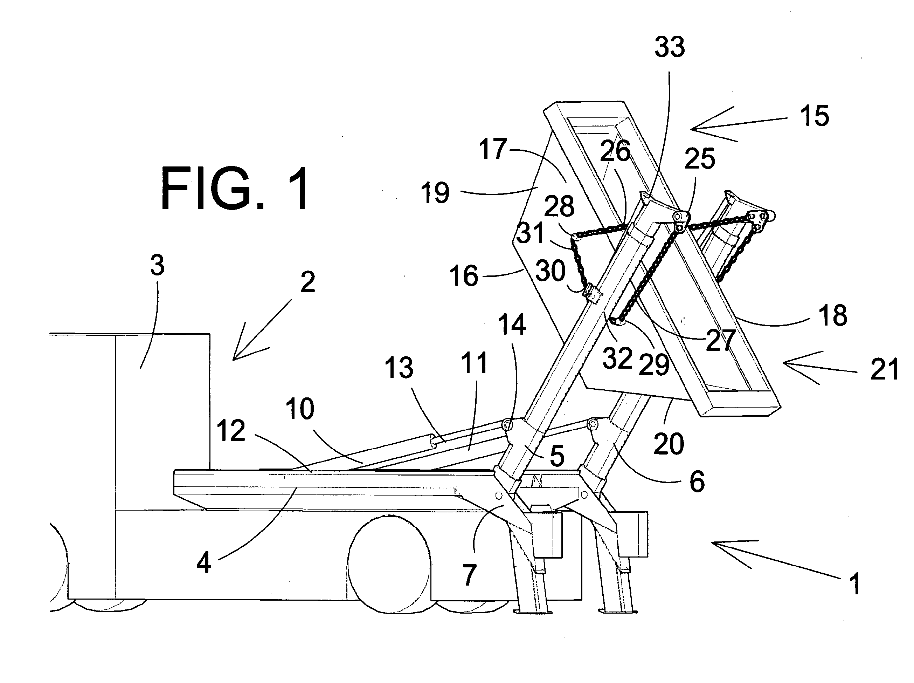

**Figure 1** shows a skip loader 1 mounted on a truck 2 at the rear part of the latter, behind a driving cab 3. The skip loader 1 comprises a platform 4, of rectangular shape by way of example, connected to the truck 2 chassis so that the long sides of the rectangle are arranged parallel to the advancing direction of the truck 2. Two telescopic arms 5 and 6, preferably identical to each other, are hinged, at a first end 7, to the platform 4 respectively at the two ends of the short side of the latter further away from the driving cab 3. The arms 5 and 6 are hinged to the platform 4 so that they can rotate in a respective plane preferably arranged vertically, about the same axis preferably arranged parallel to the short sides of the platform 4. The arms 5 and 6 are rotated, with respect to the platform 4, by two respective hydraulic cylinders 10 and 11 preferably identical to each other. Each hydraulic cylinder 10 and 11 comprises a base 12 at which the hydraulic cylinder is hinged to the platform 4, and a stem 13 translatable with respect to the base 12 and having a free end 14, opposite the base 12, at which the stem 13 is hinged to the arm 5 or 6 moved by it. Preferably, the hydraulic cylinders 10 and 11 are coplanar with the long sides of the platform 4 and the respective arms 5 and 6 to which they are hinged. The hydraulic cylinders 10 and 11 are therefore preferably hinged to the platform 4 and the arms 5 and 6 so as to be able to rotate in the same plane in which the arms 5 and 6 respectively lie. The hydraulic cylinders 10 and 11 are actuated so that the arms 5 and 6 are mirror images with respect to a preferably vertical plane and orthogonal with the axis of rotation of the same.

The arms 5 and 6 lift a container 15 comprising:
- a preferably rectangular base 16 at which the container 15 can be rested on the ground or on the platform 4;
- a pair of lateral walls 17 and 18 preferably connected orthogonally to the base 16 at the long sides of the latter;
- a front wall 19 and a rear wall 20 connected at the base 16 at the short sides of the latter. The front wall 19 and the rear wall 20 preferably have a diverging development starting from the base 16;
- an opening 21 opposite the base 16, delimited by the walls 17, 18, 19 and 20, and through which it is possible to insert or withdraw objects into/from the container 15.

As can be noted in figure 1, the container 15 is connected to the arms 5 and 6 so that it is interposed between the same, in particular with the lateral wall 17 opposite and connected to the arm 5 and the lateral wall 18 opposite and connected to the arm 6. The arms 5 and 6 are preferably arranged parallel to the lateral walls 17 and 18.

In the configuration shown in figure 1, the container 15 is lifted, by the arms 5 and 6, a certain distance from the platform 4 and it is tilted with respect to the ground so that its contents can be emptied out, by effect of gravity only. The skip loader 1 can be arranged in this configuration due to the manner in which the connection between the arms 5 and 6 and the container 15 is effected. For the sake of simplicity, only the connection between the lateral wall 17 and the arm 5 will be described. The connection between the lateral wall 18 and the arm 6 is almost identical.

The arm 5 is pivoted, at a second end 25 opposite the end 7, to a pair of chains 26 and 27 connecting the lateral wall 17 to the arm 5. In particular, each chain 26 and 27 is pivoted, at two ends that are mutually opposite, to the end 25 of the arm 5 and to the lateral wall 17 respectively. The pins 28 and 29 to which the chains 26 and 27 are pivoted preferably lie at the same distance from the base 16 of the container 15. The chains 26 and 27 converge towards the end 25 of the arm 5 and are connected to the lateral wall 17 so as to lie on opposite parts with respect to a plane of symmetry of the base 16 orthogonal to the lateral wall 17. The chains 26 and 27 are therefore arranged so as to form a "V" with the vertex in the end 25 of the arm 5 and, in the configuration shown in figure 1, the concavity facing the base 16.

Due to the mere presence of the chains 26 and 27 and the relative pins, the container 15 is rotatable with respect to the arms 5 and 6. The chains 26 and 27 preferably lie in a same vertical plane parallel to the lateral wall 17 and wherein they are rotatable about the pins of the arm 5. If the connection between the arms 5 and 6 and the container 15 consisted exclusively of the chains 26 and 27 and of the relative pins (as in the skip loaders belonging to the state of the art), the container 15, if balanced, when it does not rest on the platform 4, or on the ground, has the base 16 arranged almost parallel to the ground.

As an alternative to the chains 26 and 27 it is possible to use ropes or similar elements extended lengthwise and highly flexible.

In an alternative embodiment of the skip loader object of the invention not shown in the figures, the chains 26 and 27 are pivoted to the same pin of the arm 5, at the end 25 of the latter.

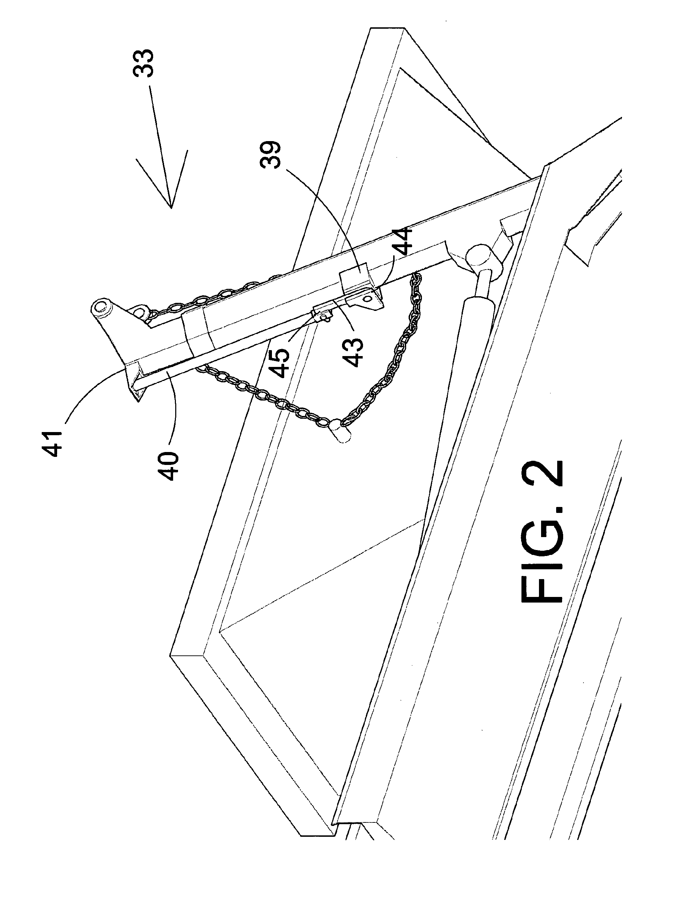

Still referring to the connection between the lateral wall 17 and the arm 5, the skip loader 1 further comprises:
- a third chain 30 pivoted, at two ends 31 and 32 that are mutually opposite, to the lateral wall 17 preferably to the same pins 28 and 29 to which the chains 26 and 27 are pivoted. The chains 26, 27 and 30 thus delimit a preferably isosceles triangle, with the congruent sides corresponding to the chains 26 and 27, and the base corresponding to the chain 30;
- a device 33 (better visible in figures 2 to 4) acting as a tensioner of the chain 30. In particular, in the configuration shown in figure 1, the tensioner 33 applies a force to the chain 30 tending to move the latter away from the end 25 of the arm 5 and of such intensity that the chain 30 is tightened. The chain 30 has a length that is preferably greater than the distance between the pins 28 and 29, therefore, in the absence of the tensioner 33, it is slack.

When the chain 30 is tightened by the tensioner 33, the force tending to move the chain 30 away from the end 25 of the arm 5 is transmitted to the container 15 and, from this, to the chains 26 and 27 until reaching the pins to which the chains are hinged to the end 25 of the arm 5. The intensity of said force is such that, in view of the kinematics described above, the chains 26 and 27 are integrally connected to the pins to which they are pivoted, so that they are no longer rotatable with respect to the arm 5. When the chain 30 is tightened, the container 15 is therefore integrally connected to the arm 5. This allows tilting and keeping the container 15 tilted even at a certain distance from the platform 4.

A third chain and a tensioner respectively identical to the chain 30 and the tensioner 33 are present at the arm 6 and at the lateral wall 18.

Referring to **figures 2 to 4****,** several components of the tensioner 33 can be observed. In particular, the tensioner 33 comprises:
- a hydraulic cylinder 40 comprising a base 41 at which the hydraulic cylinder 40 is hinged to the arm 5 in proximity to the end 25, and a stem 42 translatable with respect to the base 41;
- a skid 39 slidable on the arm 5;
- a hook 43 (or a similar element extended lengthwise) hinged, at one end 44, to the skid 39 and, at one end 45 opposite the end 44, to the stem 42 at one end 46 of the latter opposite the base 41.

The arm 5 therefore acts as a sliding guide for the skid 39.

The connection between the hydraulic cylinder 40 and the arm 5 is such to allow a rotation of the hydraulic cylinder 40 with respect to the arm 5 in a plane preferably orthogonal to the lateral wall 17 and preferably arranged parallel to the arm 5. The connection between the stem 42 and the hook 43 is such to allow a rotation between the hydraulic cylinder 40 and the hook 43 in a plane preferably orthogonal to the lateral wall 17 and preferably arranged parallel to the arm 5. The connection between the hook 43 and the skid 39 is such to allow a rotation of the hook 43 with respect to the skid 39 (and thus with respect to the arm 5) in a plane preferably orthogonal to the lateral wall 17 and preferably arranged parallel to the arm 5. Still more preferably, the three planes of rotation mentioned above are coincident.

In the configuration shown in figure 2, the hydraulic cylinder 40 is completely contracted and the skid 39 occupies the position closest to the base 41. The hydraulic cylinder 40 and the hook 43 are preferably aligned, and still more preferably parallel to the arm 5. The hook 43 is in a position such that it is not in contact with the chain 30. The latter is slack and has a catenary development. In this configuration, the container 15 is rotatable with respect to the arms 5 and 6 and does not rest on the platform 4, or on the ground. Given that the container 15 is balanced, it has the base 16 arranged almost parallel to the ground. Starting from the configuration shown in figure 2, an extension of the hydraulic cylinder 40 determines a translation of the skid 39 away from the base 41, and a rotation of the hook 43 in a direction such that an approaching of the end 45 (and the end 46 of the stem 42 therewith) to the lateral wall 17 of the container 15 is brought about. The translation of the skid 39 and the rotation of the hook 43 determine an approaching of the hook 43 to the chain 30, until the hook 43 comes into contact with the latter.

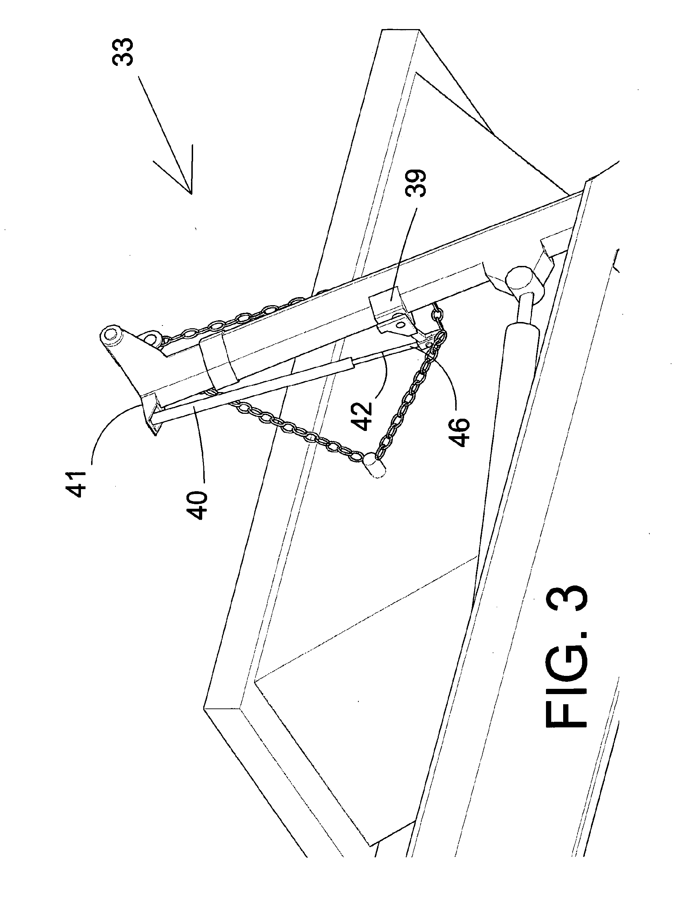

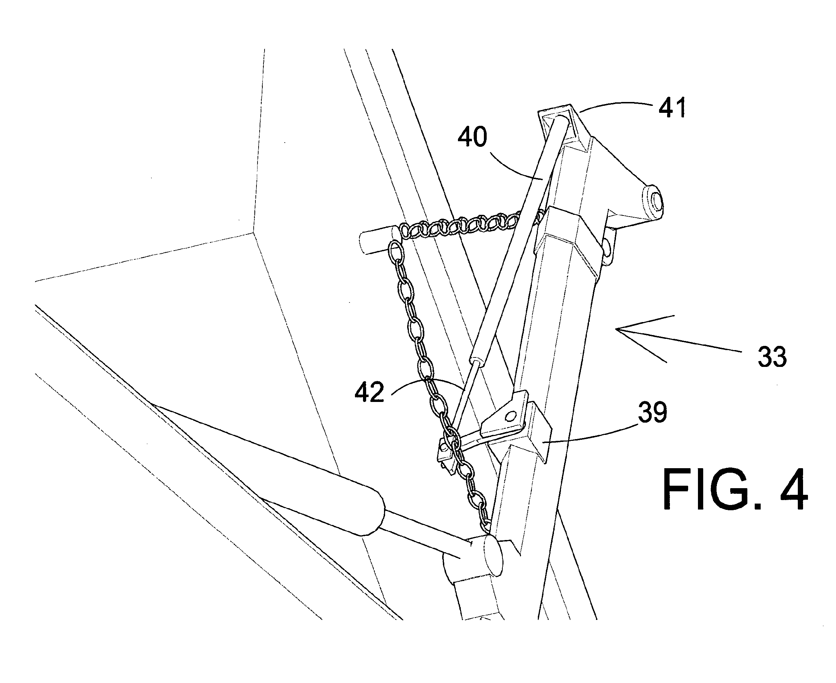

In the configuration shown in the figures 3 and 4, the hydraulic cylinder is completely extended and the skid 39 occupies the position furthest away from the base 41. The hook 43 is in contact with the chain 30 and is arranged transversely to the latter, preferably orthogonal to the arm 5 and the lateral wall 17. The hook 43 has a concavity directed towards the chain 30. The hydraulic cylinder 40 applies, by means of the hook 43, a force to the chain 30 tending to move the latter away from the end 25 of the arm 5 and with intensity such to tighten the chain 30. The latter therefore stops the movement of the hook 43. The force applied by the hook 43 to the chain 30 has an intensity preferably comprised between 30 KN and 100 KN, and still more preferably comprised between 50 KN and 80 KN. It results that the chains 26 and 27 are integrally connected to the pins to which they are pivoted, so as to no longer be rotatable with respect to the arm 5. The container 15 is therefore integrally connected to the arms 5 and 6.

Starting from the configuration shown in figures 3 and 4, a shortening of the hydraulic cylinder 40 determines a translation of the skid 39 towards the base 41, and a rotation of the hook 43 in a direction such that the end 45 (and the end 46 of the stem 42 therewith) moves away from the lateral wall 17 of the container 15. The translation of the skid 39 and the rotation of the hook 43 determine a separation of the hook 43 from the chain 30, until going back to the configuration shown in figure 2.

In an alternative embodiment of the skip loader object of the invention, not shown in the figures, the hydraulic cylinder 40 is rotatable, with respect to the arm 5, not only in a plane preferably arranged orthogonal to the lateral wall 17, but also in a plane preferably arranged parallel to the latter. Rather than being slidable on the arm 5, the skid 39 is slidable on a guide, also rotatable, with respect to the arm 5, in a plane preferably arranged parallel to the lateral wall 17. The skid 39 is therefore released from the arm and the tensioner 33 is rotatable in a plane preferably arranged parallel to the lateral wall 17. Still more preferably, the tensioner 33 is rotatable about an axis passing through the ends 25 of the arms 5 and 6 (that is about the same axis about which the chains 26 and 27, and hence the container 15, are rotatable). The skip loader is further provided with an actuator by means of which it is possible to rotate the tensioner 33 about said axis. In this alternative embodiment, a second manner in which the container 15 can be tilted by a desired angle with respect to the ground, in alternative or in combination with the first manner described above and requiring a rotation of the arms 5 and 6, consists of tightening the chain 30 through the tensioner 33 and subsequently rotating the latter about said axis of rotation, without moving the arms 5 and 6.

Based on the description given for a preferred embodiment, it is obvious that some changes can be introduced by the man skilled in the art without departing from the scope of the invention as defined by the following claims.

## Claims

1. Skip loader (1) comprising:
• a first and a second arm (5, 6) connected, at a first end (7), to a load-bearing structure (4) by means of first connection means suitable for allowing a rotation between said arm (5, 6) and said load-bearing structure (4);
• a container (15) comprising at least one pair of mutually opposite lateral walls (17, 18), at each of which said container (15) is connectable, by means of second connection means (26, 27, 28, 29), to one of said arms (5, 6) at a second end (25) thereof opposite said first end (7), said second connection means (26, 27, 28, 29) being suitable for allowing a rotation between said container (15) and said arms (5, 6);
said skip loader (1) further comprising, for each said arm (5, 6):
• means (30) for stopping a movement of coupling means (43) connected to said arm (5, 6), said stopping means (30) being connected to said lateral wall (17, 18);
• actuator means (40, 42) connected to said arm (5, 6) and suitable for moving said coupling means (43) between a first position at which said coupling means (43) are not in contact with said stopping means (30), and a second position at which said coupling means (43) are in contact with said stopping means (30), when said coupling means (43) are in said second position, said actuator means (40, 42) applying a force to said stopping means (30) tending to alter the distance between said stopping means (30) and said second end (25), said force being of such intensity that said second connection means (26, 27, 28, 29) do not allow any rotation between said container (15) and said arms (5, 6);
said skip loader (1) being **characterized in that**, for each said arm (5, 6):
• said actuator means (40, 42) comprise a third end (41) and a fourth end (46) that are mutually opposite;
• said coupling means (43) comprise a first longitudinal element (43) transversely in contact with said stopping means (30) when said coupling means (43) are in said second position, said actuator means (40, 42) applying said force to said stopping means (30) by means of said first longitudinal element (43), said first longitudinal element (43) comprising a fifth end (45) and a sixth end (44) that are mutually opposite;
said actuator means (40, 42) being connected to said arm (5, 6) at said third end (41) by means of third connection means suitable for allowing a rotation between said actuator means (40, 42) and said arm (5, 6),
said actuator means (40, 42) being connected, at said fourth end (46), to said fifth end (45) of said first longitudinal element (43) by means of fourth connection means suitable for allowing a rotation between said actuator means (40, 42) and said first longitudinal element (43),
said first longitudinal element (43) being connected to said arm (5, 6) at said sixth end (44) by means of fifth connection means suitable for allowing a rotation between said first longitudinal element (43) and said arm (5, 6) in a plane arranged transverse to said lateral wall (17, 18).

2. Skip loader (1) according to claim 1, **characterized in that** said first longitudinal element (43) is arranged parallel to said arm (5, 6) when said coupling means (43) are in said first position.

3. Skip loader (1) according to any one of the preceding claims, **characterized in that** said actuator means (40, 42) are arranged parallel to said arm (5, 6) when said coupling means (43) are in said first position.

4. Skip loader (1) according to any one of the preceding claims, **characterized in that** said actuator means (40, 42) comprise a linear actuator (40, 42) including a base (41) connected to said arm (5, 6) at said third end (41) by means of said third connection means, and an element (42) translatable with respect to said base (41) connected, at said fourth end (46), to said fifth end (45) of said first longitudinal element (43) by means of said fourth connection means.

5. Skip loader (1) according to any one of the preceding claims, **characterized in that** said first longitudinal element (43) has a concavity directed towards said stopping means (30) when said coupling means (43) are in said second position.

6. Skip loader (1) according to any one of the preceding claims, **characterized in that** said fifth connection means (39) are also suitable for allowing a translation of said first longitudinal element (43) parallel to said arm (5, 6).

7. Skip loader (1) according to any one of the preceding claims, **characterized in that** the intensity of said force applied by said actuator means (40, 42) is comprised between 30 KN and 100 KN.

8. Skip loader (1) according to claim 7, **characterized in that** said intensity is comprised between 50 KN and 80 KN.

9. Skip loader (1) according to any one of the preceding claims, **characterized in that** said plane is parallel to said arm (5, 6).

10. Skip loader (1) according to any one of the preceding claims, **characterized in that** said stopping means (30) comprise, for each said lateral wall (17, 18), a second longitudinal element (30) comprising a seventh end (31) and an eighth end (32) that are mutually opposite, said second longitudinal element (30) being connected, at said seventh and eighth end (31, 32), to said lateral wall (17, 18) at two points (28, 29) of the latter by means of sixth connection means suitable for allowing a rotation between said second longitudinal element (30) and said lateral wall (17, 18) in a fourth plane, said second longitudinal element (30) being flexible and having a length greater than the distance between said two points (28, 29) of said lateral wall (17, 18), so as to be slack, said force applied by said actuator means (40, 42) tightening said second longitudinal element (30).
